# EUROPÄISCHE PATENTSCHRIFT

(11) **EP 0 728 549 B1**
(45) Veröffentlichungstag und Bekanntmachung des Hinweises auf die Patenterteilung: **17.11.1999**
(21) Anmeldenummer: 95109792.2
(22) Anmeldetag: 23.06.1995
(51) Int. Cl.: B23B 31/12

(54) **Bohrvorrichtung**
Drilling device
Dispositif de perçage

(30) Priorität: 25.02.1995 DE 19506708
(43) Veröffentlichungstag der Anmeldung: 28.08.1996
(60) Teilanmeldung: 98122078.3
(73) Patentinhaber: Röhm, Günter Horst, D-89567 Sontheim (DE)
(72) Erfinder: Röhm, Günter Horst, D-89567 Sontheim (DE); Mack, Hans-Dieter, D-89567 Sontheim (DE)
(74) Vertreter: Fay, Hermann, Dipl.-Phys. Dr.

(56) Entgegenhaltungen:
- EP-A- 0 561 247
- DE-C- 3 437 792
- DE-C- 4 023 303
- FR-A- 1 602 481

## Beschreibung

Die Erfindung betrifft eine Bohrvorrichtung, bestehend aus einem Bohrfutter mit einem Futterkörper, mit zwischen sich ein Bohrwerkzeug aufnehmenden Spannbacken, die Backenschäfte aufweisen, welche zur Anpassung der Spannbackenstellung an den Einspanndurchmesser des Bohrwerkzeugs und zum Spannen und Lösen des Bohrfutters in Führungsaufnahmen des Bohrfutters verstellbar sind, wobei die Enden der Backenschäfte beim Verstellen der Spannbacken zu größeren Einspanndurchmessern in ihrer Extremstellung rückwärts aus den Führungsaufnahmen austreten, und mit einem mit dem Futterkörper koaxialen und zum Verstellen der Spannbacken relativ zum Futterkörper verdrehbaren Spannring, sowie aus einer mit dem Futterkörper koaxialen und drehschlüssig verbundenen Bohrspindel, die in einem Spindelgehäuse, insbesondere einer Handbohrmaschine, drehbar und antreibbar gelagert ist.

Bohrvorrichtungen dieser Art sind in verschiedenen Ausführungsformen sowohl hinsichtlich der Bohrmaschine als auch des Bohrfutters bekannt. So sind insbesondere vergleichbare Bohrfutter von unterschiedlichem Aufbau und unterschiedlicher Funktionsweise z. B. in DE 42 38 465 C, DE 34 37 792 C1 oder DE 37 27 147 A1 beschrieben. Allen diesen bekannten Bohrvorrichtungen ist gemeinsam, daß die Bohrmaschine und das Bohrfutter in ihrer gegenseitigen Zuordnung nur insoweit einander angepaßt sind, daß das Bohrfutter auf die Bohrspindel paßt und die Bohrspindel diejenigen Dreh- und Schlagfunktionen auszuüben vermag, welche im Bohrbetrieb für das jeweilige Bohrfutter benötigt werden. Im übrigen aber ist das Bohrfutter ein in sich abgeschlossenes, von der Bohrmaschine unabhängiges selbständiges Teil, das mindestens eine axiale Länge besitzen muß, die nicht nur die Länge der Backenschäfte mit den Spannbacken, sondern auch die Hublänge einschließt, um welche sich die Backenschäfte in ihren Führungsaufnahmen maximal verschieben, wenn die Spannbacken zwischen dem kleinsten und dem größtmöglichen Einspanndurchmesser verstellt werden. Auf der Seite der Bohrmaschine bedingt in der Regel das im Spindelgehäuse bohrfutterseitig am Austritt der Bohrspindel befindliche Spindellager ebenfalls eine gewisse axiale Baulänge, die sich zu der des Bohrfutters addiert, betrachtet man die Bohrvorrichtung insgesamt, in der das Bohrfutter und das Spindellager längs der Bohrspindel axial hintereinander gereiht sind.

Die EP 0 561 247 A1, die dem Oberbegriff des Patentanspruchs 1 entspricht, zeigt ein Bohrfutter, das in fertigungstechnisch günstiger Weise in Steckmontage zusammengesetzt werden kann, wozu der Futterkörper einen zylindrischen Abschnitt aufweist, auf den die übrigen Elemente des Bohrfutters wie ein Stützring, ein einstückig mit der Stellhülse ausgebildeter Gewindering und eine Backenführungshülse aufgesteckt werden, wobei der zylindrische Abschnitt des Futterkörpers sich auf der axial der Bohrspindel zugewandten Seite mittels eines Konus verdickt. Im Stützring sind die Führungsbohrungen für die Spannbacken angeordnet, wobei bedingt durch den Aufbau des Bohrfutters die Spannbacken in den Führungsbohrungen des Stützringes nur eine geringe, nämlich der Dicke des Stützringes entsprechende Führungslänge haben. In der axial zurückgezogenen Extremposition der Spannbacken sind die Enden der Backenschäfte auf der radial äußeren Seite durch den Stützring nicht mehr geführt; während sie auf der radial inneren Seite im Bereich des Konus dem Futterkörper anliegen, dort abgestützt sind und lediglich mit einem kleinen Bruchteil ihrer Gesamtlänge vom Futterkörper hervortreten, und zwar in einen Ringraum, der von der Stellhülse des Bohrfutters gebildet und daher diesem selber zuzuordnen ist. Das Bohrfutter stellt also die gesamte axial benötigte Länge für sämtliche Betriebszustände zur Verfügung. Eine bestimmte, aufeinander angepaßte Formgebung von Gehäuse und Bohrfutter ist nicht vorhanden.

Der Erfindung liegt die Aufgabe zugrunde, eine Bohrvorrichtung der eingangs genannten Art so auszubilden, daß die Bohrmaschine mit ihrem Spindelgehäuse einerseits und das Bohrfutter andererseits aufeinander abgestimmt und zu einer integrierten Bauform von axial möglichst kurzer Baulänge vereinigt sind.

Diese Aufgabe wird bei einer Bohrvorrichtung mit den eingangs aufgeführten Merkmalen erfindungsgemäß dadurch gelöst, daß die Backenschäfte rückwärts aus den Spannbacken zu größeren Einspanndurchmessern rückwärts aus den Führungsaufnahmen austreten und daß das Bohrfutter auf der Bohrspindel axial so dicht am Spindelgehäuse angeordnet ist, daß die rückwärts aus den Führungsaufnahmen austretenden Enden der Backenschäfte in einen im Spindelgehäuse koaxial mit der Bohrspindel vorgesehenen, axial zum Bohrfutter hin offenen Ringraum vorstehen, in dem die Backenschäfte bei sich drehendem Bohrfutter umlaufen.

Bei der erfindungsgemäßen Bohrvorrichtung bilden Spindelgehäuse und Bohrfutter in optimal aufeinander abgestimmter Weise eine integrierte Bauform, deren axiale Baulänge im Vergleich zu den bekannten Bohrvorrichtungen um so viel kürzer ist, wie die aus den Führungsaufnahmen im Bohrfutter austretenden Backenschäfte maximal in den im Spindelgehäuse vorgesehenen Ringraum vorstehen. Befindet sich im Spindelgehäuse ein Spindellager, das bohrfutterseitig am Austritt der Bohrspindel aus dem Spindelgehäuse angeordnet ist, so ist eine bevorzugte Ausführungsform der Erfindung dadurch gekennzeichnet, daß das Spindellager vom Ringraum umgeben ist und sich zwischen den rückwärts aus den Führungsaufnahmen austretenden Enden der Backenschäfte befindet. Dies ist von besonderem Vorteil für die axiale Baulänge, denn die in den Ringraum vorstehenden Teile der Backenschäfte befinden sich dann seitlich neben dem Spindellager, also nicht mehr mit ihm, wie bei den bekannten Vorrichtungen, in axialer Reihung. Die Erfindung ermöglicht im Ergebnis eine sehr vorteilhafte, kompakte und kurze Bauweise der Bohrvorrichtung insgesamt und insbesondere des Bohrfutters, was dem Maschinenhersteller erlaubt, aufgrund des Raumgewinns und des geringeren Gewichtes die Maschinenkonstruktion zu überarbeiten und zu vereinfachen, ferner die Betriebsmöglichkeiten sowie die Bedienung und die Handhabung der Bohrvorrichtung insgesamt zu verbessern. Durch die Lagerung der Bohrspindel axial sehr nahe an dem im Bohrfutter gehaltenen Werkzeugschaft werden eine höhere Rundlaufgenauigkeit und weniger Vibrationen erreicht. Die Kurzbauweise verringert die Gestehungskosten der Bohrvorrichtung, deren Gewicht und deren Gesamtbaulänge. Gleichzeitig besteht durch die Integration von Bohrfutter und Spindelgehäuse in einfacher Weise die Möglichkeit, zwischen der Bohrmaschine und dem Bohrfutter außer der Dreh- und Schlagfunktion noch weitere Funktionen zur Beeinflussung des Bohrbetriebs zu übertragen.

Aus Gründen der Formgebung und der Sicherheit empfiehlt es sich, den Ringraum zwischen dem Futterkörper und dem Spindelgehäuse nach außen hin abzuschließen. Eine dafür bevorzugte Ausführungsform ist dadurch gekennzeichnet, daß das Spindelgehäuse den Ringraum an dessen von der Bohrspindel aus gesehen auswärts liegenden Seite übergreift und mit einem im Querschnitt kreisförmigen Gehäuserand bis an das Bohrfutter vorsteht, wobei der Gehäuserand mit dem Bohrfutter zweckmäßigerweise eine axiale Überlappung bildet. Die Überlappung ist vorzugsweise zwischen dem Gehäuserand und dem Spannring des Bohrfutters ausgebildet. Die Integration von Spindelgehäuse und Bohrfutter bietet weiter die vorteilhafte Möglichkeit, daß der Futterkörper axial in das Spindelgeähuse vorsteht und im Spindelgehäuse einen Zahnkranz aufweist, der mit einem zum Bohrspindelantrieb gehörenden Antriebszahnrad im Eingriff steht, so daß im Ergebnis der Drehantrieb direkt, d. h. ohne Vermittlung durch die Bohrspindel, auf den Futterkörper wirkt. Ähnlich wie der Drehantrieb kann auch der Schlagantrieb ohne Zwischenschaltung der Bohrspindel unmittelbar auf den Futterkörper wirksam werden. Eine dafür besonders geeignete Anordnung ist dadurch gekennzeichnet, daß unmittelbar zwischen dem rückwärtigen Ende des Futterkörpers einerseits und dem Spindellager oder einem zwischen der Bohrspindel und dem Ringraum befindlichen Hals des Spindelgehäuses andererseits ein die Schlagfunktion auf das Bohrfutter bei dessen Umlauf erzeugender Profilkranz vorgesehen ist.

Vom Ringraum können nach außen führende Reinigungsöffnungen vorgesehen sein. Die im Ringraum umlaufenden Backenschäfte versetzen die Luft im Ringraum in Rotation, was eine entsprechende Mitnahme vom in den Ringraum gelangtem Bohrschmutz ergibt, der somit durch die Reinigungsöffnungen nach außen abgeschleudert werden kann. Es besteht aber auch die Möglichkeit, solchen Schmutz aus dem Ringraum auszublasen oder abzusaugen, was am einfachsten dadurch zu erreichen ist, daß im Ringraum ein im Spindelgehäuse vorgesehener Druck- oder Saugluftkanal mündet, der an ein Druck- oder Saugluftgebläse angeschlossen oder anschließbar ist, wobei das Sauggebläse problemlos innerhalb des Spindel- bzw. Bohrmaschinengehäuses ausgebildet sein kann. Der sich bei dieser Anordnung im Ringraum aufbauende Über- oder Unterdruck übt außerdem eine sehr erwünschte Reinigungswirkung im übrigen Bohrfutter aus, insbesondere in den Führungsaufnahmen für die Spannbacken.

Für die Verbindung des Bohrfutters mit der Bohrspindel bestehen im Rahmen der Erfindung vielfältige Möglichkeiten, insbesondere in Abhängigkeit von der Art des beabsichtigten Bohrbetriebs, wie Schlag- oder Hammerbohren, wobei für den Fall des Hammerbohrens in der hohlen Bohrspindel auch ein Döpper vorgesehen sein kann, der unmittelbar das im Bohrfutter gehaltene Ende des Werkzeugschafts beaufschlagt, wie es vielfach bekannt ist und daher hier keiner weiteren Beschreibung bedarf. Im einzelnen können die Bohrspindel und der Futterkörper einstückig miteinander ausgeführt sein. Selbstverständlich besteht aber auch die Möglichkeit einer getrennten Herstellung von Bohrspindel und Futterkörper, in welchem Fall es sich empfiehlt, daß die Bohrspindel stirnseitig einen axialen Verbindungszapfen und der Futterkörper eine Zapfenaufnahme aufweist, in die der Verbindungszapfen drehschlüssig eingreift. Im einzelnen können der Verbindungszapfen und die Zapfenaufnahme einen unrunden, insbesondere mehrkantigen Querschnitt besitzen und durch eine in Umfangsrichtung verlaufende Nut- und Federverbindung axial aneinander gesichert sein. Anstelle dieser Nut- und Federverbindung kann der Verbindungszapfen auch in einer Ringnut einen am Futterkörper zum Anschlag kommenden Sicherungsring tragen. Auch besteht die Möglichkeit, anstelle der Nut- und Federverbindung in der Wand der Zapfenaufnahme eine Ringnut auszubilden, in die Werkstoff aus dem Verbindungszapfen durch entsprechende Werkstoffverformung eingesickt ist, wobei diese Werkstoffverformung nur einen einfachen Arbeitsgang bei der Montage des Bohrfutters auf der Bohrspindel erfordert. Eine weitere vorteilhafte Verbindungsmöglichkeit ist dadurch gekennzeichnet, daß der Verbindungszapfen und die Zapfenaufnahme durch eine axial verlaufende Nut- und Federverbindung gegen Relativverdrehungen und mit einem am Futterkörper zum Anschlag kommenden, in einer Ringnut des Verbindungszapfens sitzenden Anschlagring gegen axiale Relatiwerstellungen gesichert sind. Auch können der Verbindungszapfen und die Zapfenaufnahme ineinander geschraubt und der Verbindungszapfen mit stirnseitig offenen Radial- oder Axialnuten versehen sein, in die Werkstoff aus der Wand der Zapfenaufnahme wiederum durch entsprechende Werkstoffverformung eingesickt ist, wobei die Einsickung dazu dient, bei Linkslauf der Bohrspindel ein Lockern der Gewindeverbindung zu verhindern.

In einer weiteren bevorzugten Ausführungsform steht der Verbindungszapfen bis in eine im Futterkörper für die Aufnahme des Werkzeugschafts vorhandene Ausnehmung vor, in die die Spannbacken hineinragen. Die Stirn des Verbindungszapfens kann dann zur unmittelbaren Anlage des Endes des im Bohrfutter gehaltenen Werkzeugschaftes dienen, was sich aus Verschleißgründen vor allem dann empfiehlt, wenn zwar die Bohrspindel mit ihrem Gewindezapfen, nicht aber auch der Futterkörper gehärtet ist. Auch wird dadurch die Schlagübertragung von der Bohrspindel auf den Werkzeugschaft wirksamer. Der Verbindungszapfen kann insbesondere axial begrenzt verschiebbar in der Zapfenaufnahme gehalten sein, was vor allem im Hammerbohrbetrieb gewünscht sein kann, damit die auf das Schaftende des Werkzeugs einwirkenden Schläge nicht unnötig durch das Bohrfutter gedämpft werden. Im übrigen besteht auch die Möglichkeit, daß der Verbindungszapfen an seinem in die Ausnehmung für den Werkzeugschaft vorstehenden Ende Einrichtungen zur Führung und/oder Drehmitnahme des Werkzeugschaftendes aufweist, was dann vorteilhaft ist, wenn es sich bei dem Werkzeug etwa um einen Gewindebohrer oder ein Werkzeug-, insbesondere Schrauberbit, handelt.

Ein weiterer besonderer Vorteil der Erfindung ist darin zu sehen, daß axial zwischen dem Bohrfutter und dem Spindelgehäuse im Bereich des Ringraums Stell- und Betätigungsglieder für die Steuerung der verschiedenen Betriebsfunktionen der Bohrvorrichtung angeordnet sein können, ohne daß dadurch der Vorteil der kurzen Bauweise beeinträchtigt wird. Eine in dieser Hinsicht bevorzugte Ausführungsform ist dadurch gekennzeichnet, daß das Spindelgehäuse den Ringraum außen mit einem Kragen übergreift, an dem etwa radial nach innen gegen die Kraft einer Rückstellfeder verstellbare Sperrglieder angeordnet sind, die im einwärts verstellten Zustand in am Futterkörper vorgesehene Sperrausnehmungen greifen und den Futterkörper gegen Drehen sperren. Diese Sperre hält den Futterkörper gegen Mitdrehen fest, wenn zur Verstellung der Spannbacken bzw. zum Spannen oder Lösen des Bohrfutters der Spannring gedreht werden muß. Im einzelnen können dabei die Sperrausnehmungen von den Zahnlücken eines am Futterkörper ausgebildeten Zahnkranzes oder, einfacher, von den die äußere Umfangsfläche des Futterkörpers anschneidenden Führungsaufnahmen für die Backenschäfte gebildet sein. Bezüglich der Sperrglieder ist eine bevorzugte Ausführungsform dadurch gekennzeichnet, daß die Sperrglieder von den Enden einer sich in Umfangsrichtung des Kragens erstreckenden, zur Erzeugung der Rückstellkraft vorgespannten Blattfeder gebildet und durch am Kragen verstellbar geführte Betätigungsglieder verstellbar sind. Die Betätigungsglieder können in einfachster Ausführungsform als die Federenden halternde, radial verstellbare Taster ausgebildet sein. Eine andere vorteilhafte Ausführungsform besteht darin, daß ein einziges Betätigungsglied gemeinsam für alle Sperrglieder vorgesehen und dieses als am Kragen verstellbarer Betätigungsring ausgebildet ist, der mit Steuerkurven für die ihm anliegenden Sperrglieder versehen ist. Der Betätigungsring kann in Umfangsrichtung verdrehbar sein, wobei die Steuerkurven entsprechend in Umfangsrichtung verlaufen, oder in Axialrichtung verschiebbar sein, wobei die Steuerkurven entsprechend in Axialrichtung verlaufen.

Eine weitere sehr vorteilhafte Ausführungsform der erfindungsgemäßen Bohrvorrichtung ist dadurch gekennzeichnet, daß der Ringraum außen mit einer am Spindelgehäuse verstellbar geführten Betätigungshülse abgeschlossen ist, die mit einem im Spindelgehäuse axial verstellbaren, undrehbaren Sperring gekuppelt ist, der in einer gegen den Futterkörper vorgeschobenen Sperrstellung am Futterkörper zum Eingriff kommt und ihn gegen Verdrehen sperrt. Zweckmäßigerweise ist dabei die Betätigungshülse verdrehbar und axial unverschiebbar am Spindelgehäuse geführt und die Kupplung mit dem Sperring als Steuerkurve ausgebildet, in der der Sperring unter der Kraft mindestens einer Rückstellfeder axial an der Betätigungshülse anliegt. Der Ringraum ist dann vorzugsweise im Sperring ausgebildet, der am radial innen liegenden Rand des Ringraums einen Zahnring zum Sperreingriff an einem am Futterkörper zugeordneten Zahnring aufweist.

Selbstverständlich ist es im Rahmen der Erfindung möglich, mit einem den Ringraum nach außen abschließenden und von außen verstellbaren Ring auch andere Einrichtungen als nur eine Sperreinrichtung für die Drehung des Futterkörpers zu steuern. So besteht insbesondere bei einer Bohrvorrichtung, die im Spindelgehäuse eine das Drehmoment der Bohrspindel begrenzende Drehmomentkupplung besitzt, welche mittels eines außen am Spindelgehäuse verdrehbar geführten Stellrings bezüglich des maximal übertragbaren Drehmoments einstellbar ist, die bevorzugte Möglichkeit, daß der Stellring den Ringraum vom Spindelgehäuse bis zum Bohrfutter axial übergreift und nach außen abschließt.

Im folgenden wird die Erfindung an in der Zeichnung dargestellten Ausführungsbeispielen näher erläutert; es zeigen:
- Fig. 1: eine Bohrvorrichtung nach der Erfindung mit nur teilweise dargestelltem Spindel- und Bohrmaschinengehäuse in einem Längsschnitt durch die Achse der Bohrspindel,
- Fig. 2: den Gegenstand der Fig. 1 in einer anderen Ausführungsform,
- Fig. 3: eine nochmals andere Ausführungsform der Bohrvorrichtung, ebenfalls im Axialschnitt,
- Fig. 4: den Gegenstand der Fig. 3 in einer abgeänderten Ausführungsform,
- Fig. 5: den Gegenstand der Fig. 1 bis 3 in einer nochmals anderen Ausführungsform,
- Fig. 6: in den Teilfig. 6 a) bis 6 f) die Vorrichtung nach den Fig. 4 und 5 in jeweils einer Teildarstellung in verschiedenen Ausführungsformen,
- Fig. 7: den Schnitt VII - VII in Fig. 5,
- Fig. 8: eine Bohrvorrichtung nach der Erfindung mit einer Einrichtung zum Sperren des Futterkörpers gegen Verdrehen, im Axialschnitt,
- Fig. 9: den Schnitt IX - IX in Fig. 8,
- Fig. 10: den Gegenstand der Fig. 8 in einer weiteren Ausführungsform,
- Fig. 11: den Schnitt XI - XI in Fig. 10,
- Fig. 12: eine nochmals andere Ausführungsform der Bohrvorrichtung entsprechend den Fig. 8 und 10,
- Fig. 13: den Schnitt XIII - XIII in Fig. 12,
- Fig. 14: den Schnitt XIV - XIV in Fig. 12,
- Fig. 15: eine weitere Ausführungsform der Bohrvorrichtung mit einer Sperreinrichtung für den Futterkörper, ebenfalls im Axialschnitt,
- Fig. 16: den Schnitt XVI - XVI in Fig. 15,
- Fig. 17: den Schnitt XVII - XVII in Fig. 15,
- Fig. 18: eine nochmals andere Ausführungsform der Bohrvorrichtung mit Sperreinrichtung,
- Fig. 19: den Schnitt XIX - XIX in Fig. 18 in zwei verschiedenen Betriebszuständen der Sperreinrichtung,
- Fig. 20: den Schnitt XX - XX in Fig. 18,
- Fig. 21: den Schnitt XXI - XXI in Fig. 18,
- Fig. 22: einen Axialschnitt durch eine Bohrvorrichtung nach der Erfindung mit einer in die Drehmomentübertragung der Bohrspindel eingeschalteten Drehmomentkupplung, und
- Fig. 23: einen Axialschnitt durch eine nochmals andere Ausführungsform der Bohrvorrichtung nach der Erfindung.

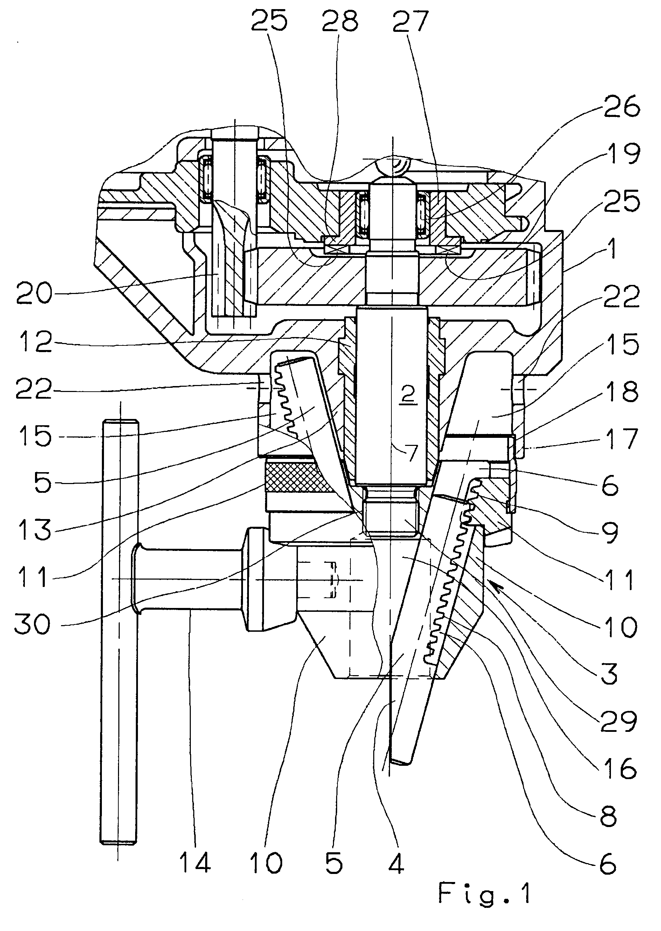

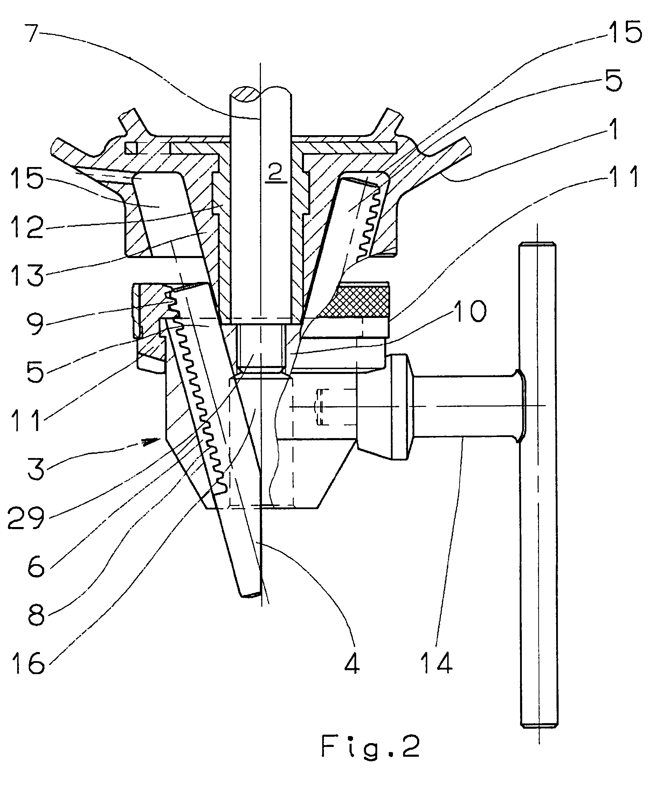

Die in der Zeichnung dargestellten Bohrvorrichtungen umfassen eine nur mit ihrem vorderen Teil gezeichnete Bohrmaschine, in deren Spindelgehäuse 1 eine in üblicher, im einzelnen nicht dargestellter Weise durch einen Motor antreibbare Bohrspindel 2 drehbar gelagert ist. An der aus dem Spindelgehäuse 1 vorstehenden Bohrspindel 2 ist der Futterkörper 10 eines Bohrfutters 3 angeschlossen, das mit drei Spannbacken 4 zur Aufnahme eines in der Zeichnung ebenfalls nicht dargestellten Bohrwerkzeugs ausgebildet ist. Die Spannbacken 4 sind an Backenschäften 5 ausgebildet, welche zur Anpassung der Spannbackenstellung an den Einspanndurchmesser des Bohrwerkzeugs und zum Spannen und Lösen des Bohrfutters 3 in Führungsaufnahmen 6 des Bohrfutters verstellbar sind, wobei diese Führungsaufnahmen 6 geneigt zur Bohrspindel- bzw. Bohrfutterachse 7 verlaufen. Die Backenschäfte 5 stehen über eine Verzahnung 8 mit dem Innengewinde 9 eines am Futterkörper 10 koaxial zur Futterachse 7 drehbar und unverschiebbar geführten Spannrings 11 in Verbindung, der in den Fig. 1 und 2 durch einen Futterschlüssel 14, in allen anderen Ausführungen schlüssellos betätigt werden kann. Durch Verdrehen des Spannrings 11 in der einen oder anderen Drehrichtung werden die Backenschäfte 5 und mit ihnen die Spannbacken 4 im Futterkörper 10 vor- oder zurückgestellt, wobei im ersteren Fall das Bohrfutter 3 geschlossen und gespannt, im letzteren Fall das Bohrfutter 3 gelöst und geöffnet wird. Die dabei möglichen Grenzstellungen der Spannbacken 4 und Backenschäfte 5 sind in den Axialschnitten der Zeichnung jeweils in der linken bzw. rechten Figurenhälfte dargestellt. Zur Lagerung der Bohrspindel 2 im Spindelgehäuse 1 dient u. a. ein Spindellager 12, das bohrfutterseitig am Austritt der Bohrspindel 2 aus dem Spindelgehäuse 1 angeordnet, nämlich in den Ausführungsbeispielen in einem Hals 13 des Spindelgehäuses 1 gehalten ist. - Die Erfindung ist allerdings nicht auf diese in der Zeichnung allein dargestellte spezielle Bauform des Bohrfutters 3 beschränkt. Im Rahmen der Erfindung können die Backenschäfte 5 auch parallel zur Futterachse 7 verlaufen, wie dies in DE 34 37 792 C1 beschrieben ist. Auch müssen die Backenschäfte 5 nicht notwendig im mit der Bohrspindel 2 verbundenen Futterkörper 10 geführt sein. Die Führungsaufnahmen 6 und die Backenschäfte 5 können auch im Spannring 11 angeordnet sein, wobei dann die Verzahnung 8 der Backenschäfte 5 mit einem entsprechend der Neigung der Führungsaufnahmen 6 konischen Außengewinde am Futterkörper 10 im Eingriff steht, wie dies beispielsweise aus der DE 37 37 147 A1 ersichtlich ist.

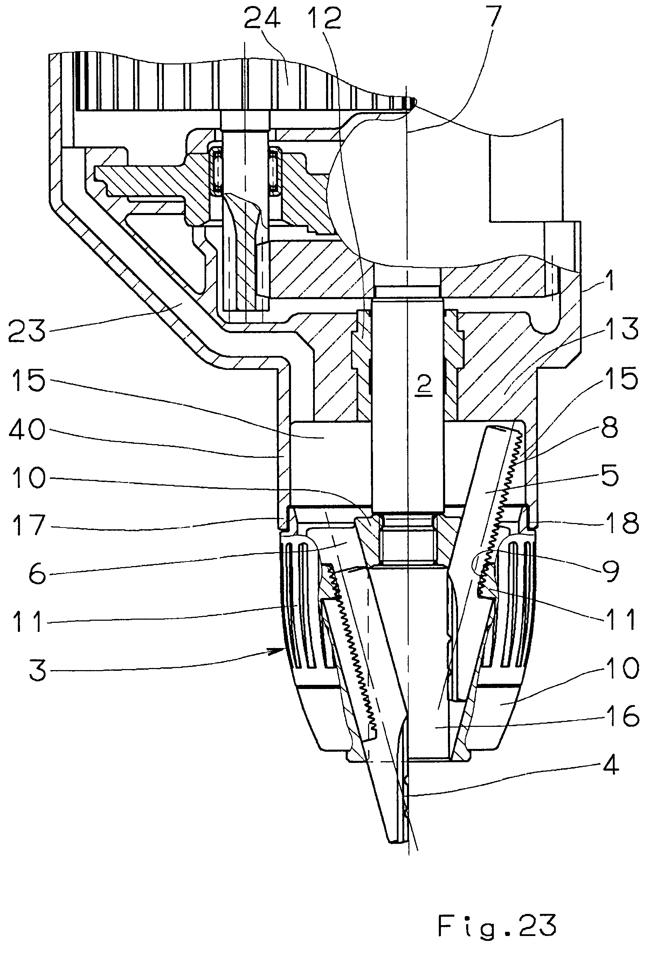

Wie im einzelnen die Futterkonstruktion auch gewählt sein mag, entsprechend der Erfindung ist das Bohrfutter 3 axial soweit verkürzt, daß die Backenschäfte 5 beim Verstellen der Spannbacken 4 zu größeren Einspanndurchmessern rückwärts aus den Führungsaufnahmen 6 austreten. Weiter ist das Bohrfutter 3 auf der Bohrspindel 2 axial so dicht am Spindelgehäuse 1 angeordnet, daß die rückwärts aus den Führungsaufnahmen 6 austretenden Enden der Backenschäfte 5 im Spindelgehäuse 1 mit ihrem aus den Führungsaufnahmen 6 ausgetretenen Teil in einen mit der Spindelachse 7 koaxialen, axial zum Bohrfutter 3 hin offenen Ringraum 15 vorstehen, in dem die Backenschäfte 5 bei rotierendem Bohrfutter 3 umlaufen. Dabei ist außer im Fall der Fig. 23 die Anordnung weiter so getroffen, daß das Spindellager 12 vom Ringraum 15 umgeben ist und sich daher zwischen den in den Ringraum 15 austretenden Enden der Backenschäfte 5 befindet. In jedem Fall ergibt sich eine sehr kurze axiale Bauweise der Bohrvorrichtung insgesamt, die zur Folge hat, daß die Bohrspindel 2 im Spindellager 12 axial sehr dicht an der Werkzeugausnehmung 16 im Bohrfutter 3 gelagert ist, was guten Rundlauf des Werkzeugs und Vibrationsfreiheit ergibt. Dabei kann die Anordnung sogar wie in Fig. 2 so getroffen werden, daß der Anschluß des Futterkörpers 10 an die Bohrspindel 2 axial noch werkzeugseitig vor dem Innengewinde 9 des Spannrings 11 und das Innengewinde 9 axial auf der Höhe des Spindellagers 12 liegt.

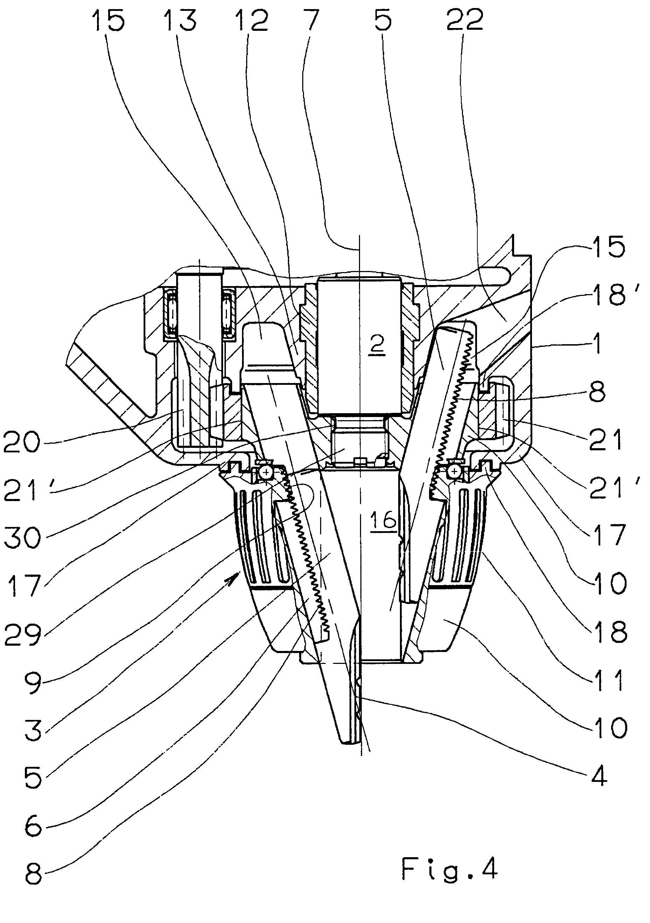

Der Ringraum 15 zwischen dem Bohrfutter 3 und dem Spindelgehäuse 1 ist in der Regel nach außen hin teilweise, wie in Fig. 2, oder vollständig, wie in allen anderen Ausführungsbeispielen, abgeschlossen. Das erfolgt in den meisten Fällen in der Weise, daß das Spindelgehäuse 1 den Ringraum 15 an dessen von der Bohrspindel 2 aus gesehen auswärts liegenden Seite übergreift und mit einem im Querschnitt kreisförmigen Gehäuserand 17 bis an das Bohrfutter 3 vorsteht, wobei der Gehäuserand 17 mit dem Bohrfutter 3 eine axiale Überlappung 18 bildet, die in der Regel zwischen dem Gehäuserand 17 und dem Spannring 11 des Bohrfutters 3 ausgebildet ist, zusätzlich aber auch zwischen dem Spindelgehäuse 1 und dem Futterkörper 10 vorgesehen sein kann, wie dies in Fig. 4 bei 18' dargestellt ist. Im einzelnen kann diese Überlappung 18 durch den Eingriff eines Ringstegs in einen Ringfalz oder eine Ringnut erfolgen, wobei je nach Zweckmäßigkeit der Ringsteg spindelgehäuseseitig und der Ringfalz bzw. die Ringnut bohrfutterseitig oder umgekehrt ausgebildet sein können.

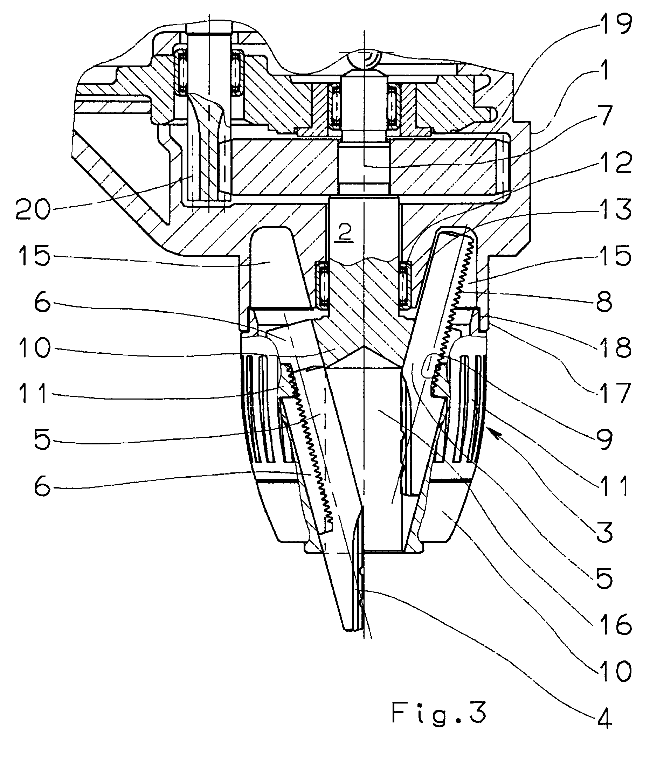

Der Antrieb des Bohrfutters 3 kann, wie üblich, über die Bohrspindel 2 erfolgen, die zu diesem Zweck über ein Zahnrad 19 mit einem vom nicht dargestellten Motor angetriebenen Antriebszahnrad 20 im Eingriff stehen kann, wie es beispielsweise die Fig. 1 oder 3 zeigen. Es besteht aber auch die in Fig. 4 dargestellte Möglichkeit, daß der Futterkörper 10 axial in das Spindelgehäuse 1 vorsteht und dort im Spindelgehäuse einen Zahnkranz 21 aufweist, der mit dem zum Drehantrieb gehörenden Antriebszahnrad 21 im Eingriff steht. Der Zahnkranz 21 kann unmittelbar einstückig am Futterkörper 10 ausgebildet, aber auch als selbständiges Teil auf den Futterkörper bei 21' aufgeschrumpft oder aufgepreßt sein. Die in Fig. 4 gezeigte Möglichkeit besitzt den Vorteil, daß der Drehantrieb ohne Vermittlung durch die Bohrspindel 2 unmittelbar auf den Futterkörper 10 wirkt.

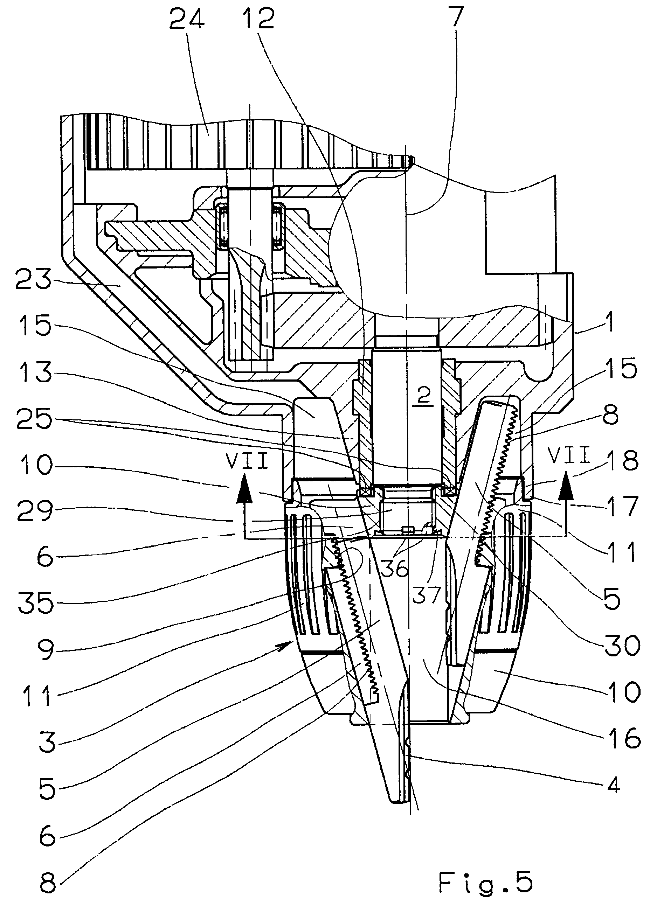

Die Fig. 1 und 4 zeigen Ausführungsformen, bei welchen vom Ringraum 15 nach außen führende Reinigungsöffnungen 22 vorgesehen sind, durch die in den Ringraum 15 gelangter Bohrschmutz nach außen austreten kann. Stattdessen besteht aber auch die aus Fig. 5 oder 23 ersichtliche Möglichkeit, daß im Ringraum 15 ein im Spindelgehäuse 1 vorgesehener Druck- oder Saugluftkanal 23 mündet, der an ein Druckoder Saugluftgebläse im Bohrmaschinengehäuse angeschlossen ist, wozu ein vom Bohrmaschinenmotor angetriebenes Lüfterrad 24 in der Bohrmaschine dient. Der sich bei laufender Maschine somit im Ringraum 15 je nach Ausbildung des Lüfterrads 24 aufbauende Über- oder Unterdruck hat, da die Überlappung 18 zwischen dem Spindelgehäuse 1 und dem Bohrfutter 3 genügend dicht schließt, eine entsprechende Druck- bzw. Saugwirkung auf die mit dem Ringraum 15 kommunizierenden Führungsaufnahmen 6 im Futterkörper 10 zur Folge, so daß sich die Reinigungswirkung bis in das Bohrfutter 3, nämlich in dessen Führungsaufnahmen 6 und dessen den Werkzeugschaft aufnehmende Ausnehmung 16, in welche die Spannbacken 4 je nach Einspanndurchmesser verschieden weit hineinragen, fortsetzt.

Die Schlagfunktion kann, wie üblicherweise der Fall, durch einen zur Spindelachse 7 konzentrischen Profilkranz 25 auf die Bohrspindel 2 ausgeübt werden, wozu die Bohrspindel 2 in beispielsweise Fig. 1 am rückwärtigen Ende in einem Nadellager 26 geführt ist, das in einer Lagerhülse 27 angeordnet ist, zwischen deren spannfutterseitigem Flansch 28 und dem Zahnrad sich der Profilkranz 25 befindet. Es besteht aber auch stattdessen die in Fig. 5 gezeigte Möglichkeit, daß der Profilkranz 25 unmittelbar zwischen dem rückwärtigen Ende des Futterkörpers 10 einerseits und dem spannfutterseitigen Spindellager 12 vorgesehen ist. Die Schlagwirkung erfolgt dann unmittelbar auf den Futterkörper 12 unter entsprechender Entlastung der Bohrspindel 2.

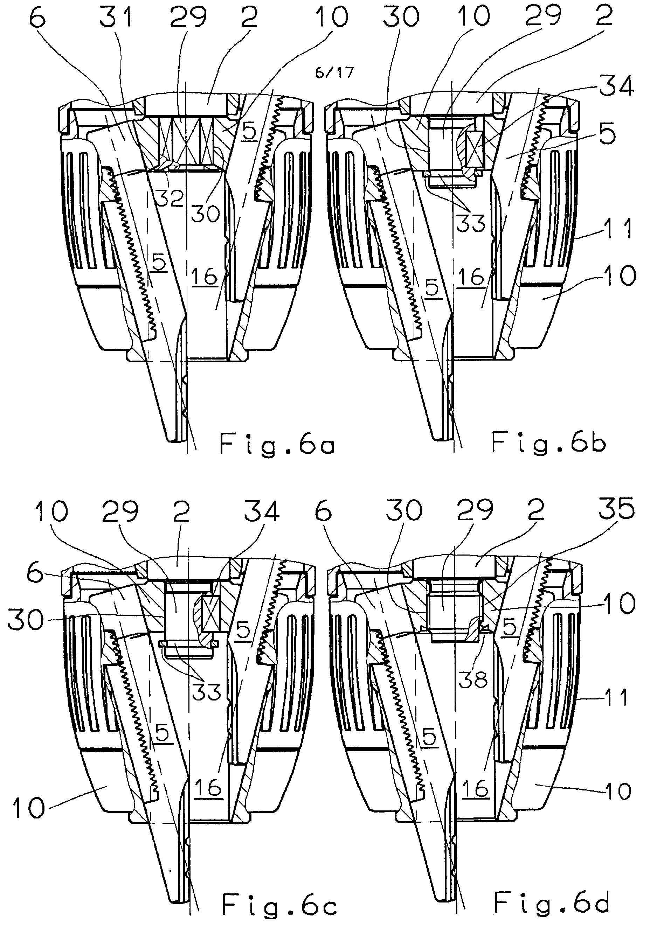

Im Ausführungsbeispiel nach Fig. 3 sind die Bohrspindel 2 und der Futterkörper 10 einstückig miteinander ausgeführt. Das spannfutterseitige Spindellager 12 ist als Nadellager ausgebildet, während in allen anderen Ausführungsbeispielen dieses Spindellager 12 als Gleitlager mit einer im Spindelgehäuse 1 gehaltenen Gleitbuchse ausgebildet ist. Bohrspindel 2 und Futterkörper 10 können selbstverständlich, wie in allen anderen Ausführungsformen gezeigt, auch getrennt voneinander hergestellt sein. Zu ihrer Verbindung besitzt die Bohrspindel 2 stirnseitig einen axialen Verbindungszapfen 29 und der Futterkörper 10 eine Zapfenaufnahme 30, in die der Verbindungszapfen 20 drehschlüssig eingreift. Entsprechend Fig. 6a besitzen der Verbindungszapfen 29 und die Zapfenaufnahme 30 einen im allgemeinen unrunden, insbesondere mehrkantigen, in Fig. 6a sechseckigen Querschnitt. Zur axialen Sicherung des Bohrfutters 3 an der Bohrspindel 2 ist inder Wand der Zapfenaufnahme 30 eine Ringnut 31 ausgebildet, in die Werkstoff 32 aus dem Verbindungszapfen 29 durch Werkstoffverformung eingesickt ist. Die axiale Sicherung kann aber auch durch eine in Umfangsrichtung verlaufende Nut- und Federverbindung 33 gemäß Fig. 6b, 6c erfolgen, wobei die Feder am Verbindungszapfen 29 einen am Futterkörper 10 zum Anschlag kommender Sicherungsring sein kann, wie dies die Fig. 6a und 6b zeigen. Die Fig. 6b, 6c zeigen außerdem eine Ausführungsform, bei der der Verbindungszapfen 29 und die Zapfenaufnahme 30 durch eine axial verlaufende Nut- und Federverbindung 34 gegen Relativverdrehungen Schließlich können der Verbindungszapfen 29 und die Zapfenaufnahme 30 selbstverständlich auch ineinander geschraubt sein. Um dabei zu verhindern, daß sich die Gewindeverbindung 35 bei Linkslauf der Bohrspindel 2 lockert, ist der Verbindungszapfen 29 mit stirnseitig offenen Radialnuten 36 versehen, in die der Werkstoff 37 aus der Wand der Zapfenaufnahme 30 wiederum durch Werkstoffverformung eingesickt ist. Die Radialnuten 36 können selbstverständlich auch als stirnseitig offene Axialnuten 38 ausgebildet sein, was in Fig. 6d dargestellt ist.

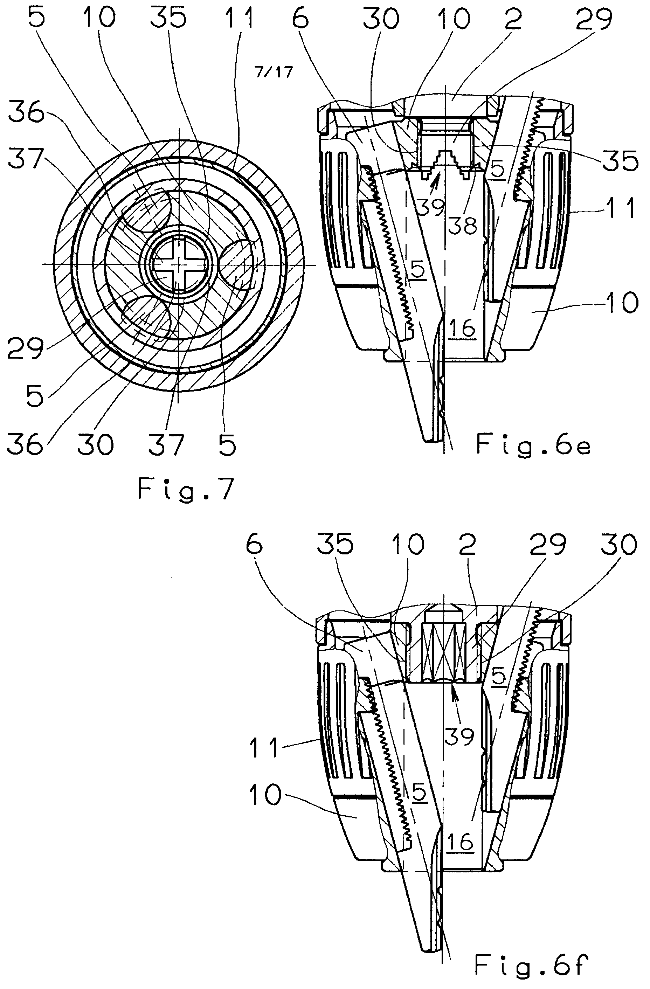

Der Verbindungszapfen 29 kann, wie in den Fig. 6b, 6c, 6d bis in die im Futterkörper für die Aufnahme des Werkzeugschaftes vorhandene Ausnehmung 16 vorstehen, in die die Spannbacken 4 hineinragen. Das Ende des in der Ausnehmung 16 zwischen den Spannbacken 4 gehaltenen Werkzeugschafts kann so unmittelbar an der Stirn des Verbindungszapfens 29 zur Anlage kommen. Dabei kann der Verbindungszapfen 29 stirnseitig Einrichtungen 39 zur Führung und/oder Drehmitnahme des Werkzeugschaftendes besitzen, wie dies beispielsweise die Fig. 6e, 6f zeigen. Im übrigen besteht die Möglichkeit, die Bohrspindel und den Futterkörper axial gegeneinander unverschieblich, wie beispielsweise in Fig. 6b, oder gegeneinander begrenzt verschiebbar anzuordnen, wie dies Fig. 6c zeigt.

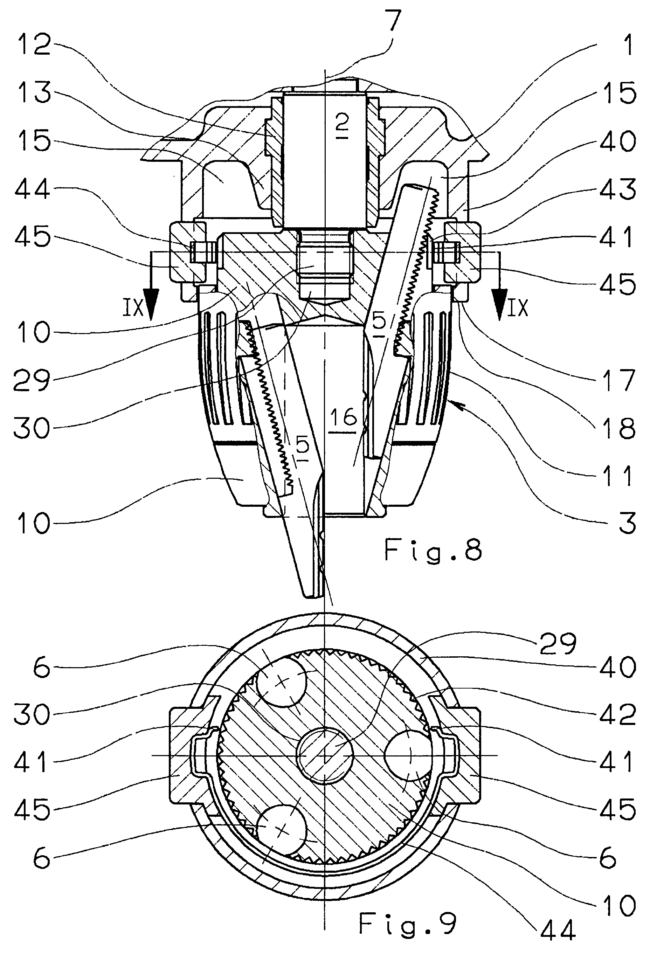

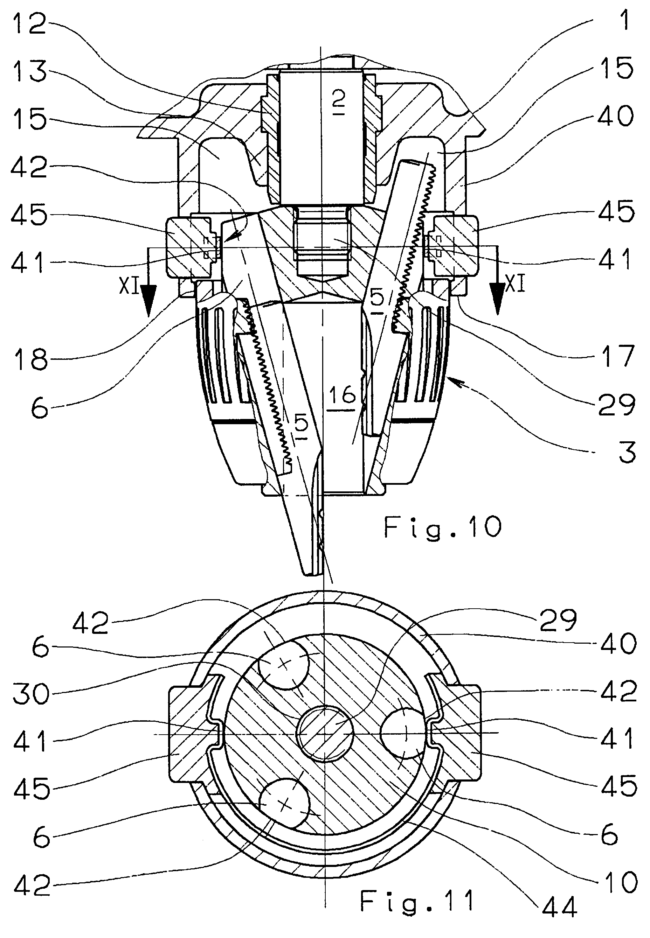

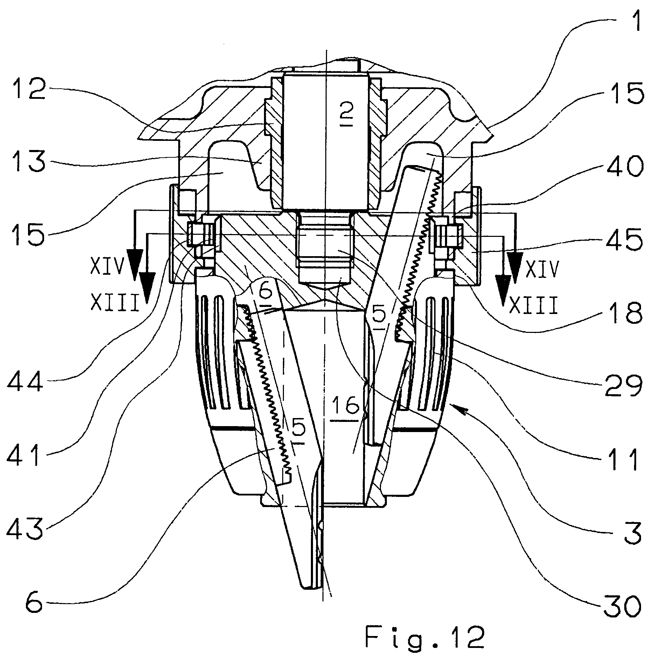

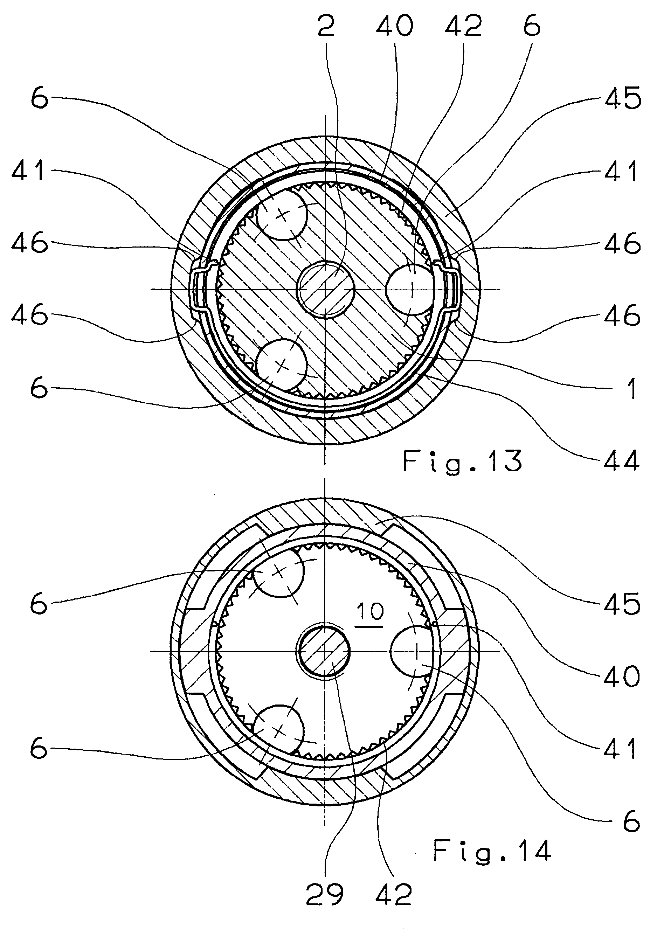

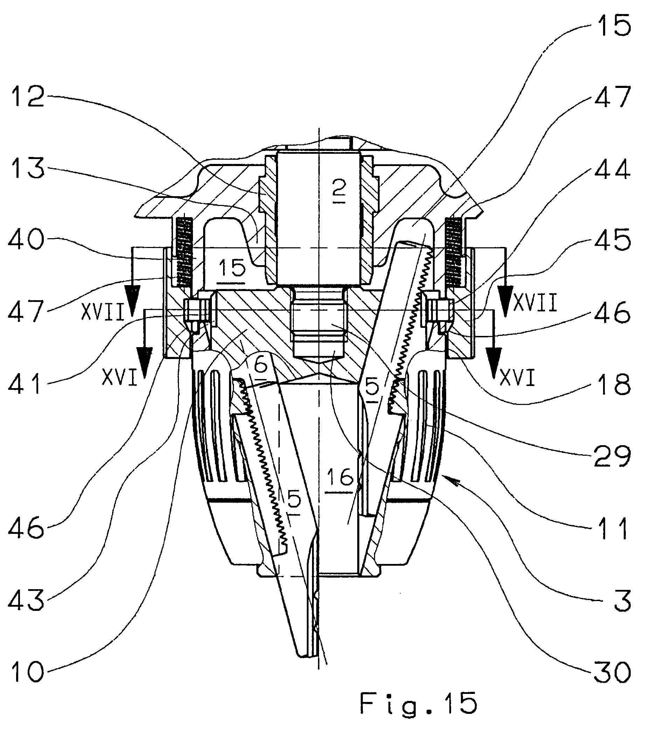

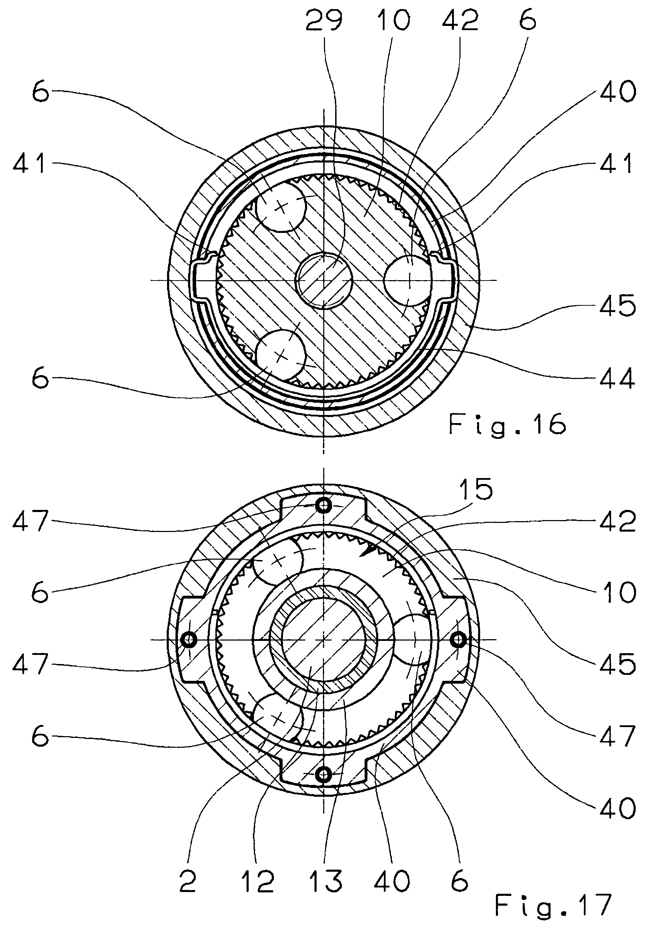

Das Spindelgehäuse 1 kann den Ringraum 15 außen mit einem Kragen 40 übergreifen, wobei dessen axiale Länge, wie insbesondere etwa in Fig. 23, nach denjeweiligen Erfordernissen größer oder kleiner gewählt werden kann. An diesem Kragen 40 können etwa radial nach innen gegen die Kraft von Rückstellfedern 44, 47 verstellbare Sperrglieder 41 angeordnet sein, die im einwärts verstellten Zustand in am Futterkörper vorgesehene Sperrausnehmungen 42 greifen und den Futterkörper 10 gegen Drehen sperren, wie dies die Fig. 8 bis 17 in verschiedenen Ausführungsformen zeigen. Die Sperrausnehmungen 42 können von den Zahnlücken eines am Futterkörper 10 ausgebildeten Zahnkranzes 43 oder, wie in Fig. 10, 11, von den die äußere Umfangsfläche des Futterkörpers 10 anschneidenden Führungsaufnahmen 6 für die Backenschäfte 5 gebildet sein. Die Sperrglieder 41 sind von den Enden einer sich in Umfangsrichtung des Kragens 40 erstreckenden, zur Erzeugung der Rückstellkraft vorgespannten Blattfeder 44 gebildet und durch am Kragen 40 verstellbar geführte Betätigungsglieder 45 in die Sperrstellung verstellbar. Diese Betätigungsglieder 45 sind im Ausführungsbeispiel nach den Fig. 8 bis 11 als an sich diametral gegenüber liegender Stelle angeordnete Taster ausgebildet, die an den Federenden 41 gehalten und radial verstellbar in entsprechenden Fenstern des Kragens 40 geführt sind. Nach den Ausführungsbeispielen entsprechend den Fig. 12 bis 17 ist dagegen nur ein einziges Betätigungsglied 45 für beide Sperrglieder 41 vorhanden, nämlich als am Kragen 40 verstellbarer Betätigungsring ausgebildet, der mit Steuerkurven 46 für die ihm anliegenden Sperrglieder 41 ausgestattet ist. Im Ausführungsbeispiel nach den Fig. 12 bis 14 ist der Betätigungsring 45 am Kragen 40 in Umfangsrichtung begrenzt verdrehbar, wobei die Steuerkurven 46 entsprechend in Umfangsrichtung verlaufen. Im Ausführungsbeispiel nach den Fig. 15 bis 17 dagegen ist der Betätigungsring 45 in Axialrichtung verschiebbar, wobei die Steuerkurven 46 entsprechend in Axialrichtung verlaufen.

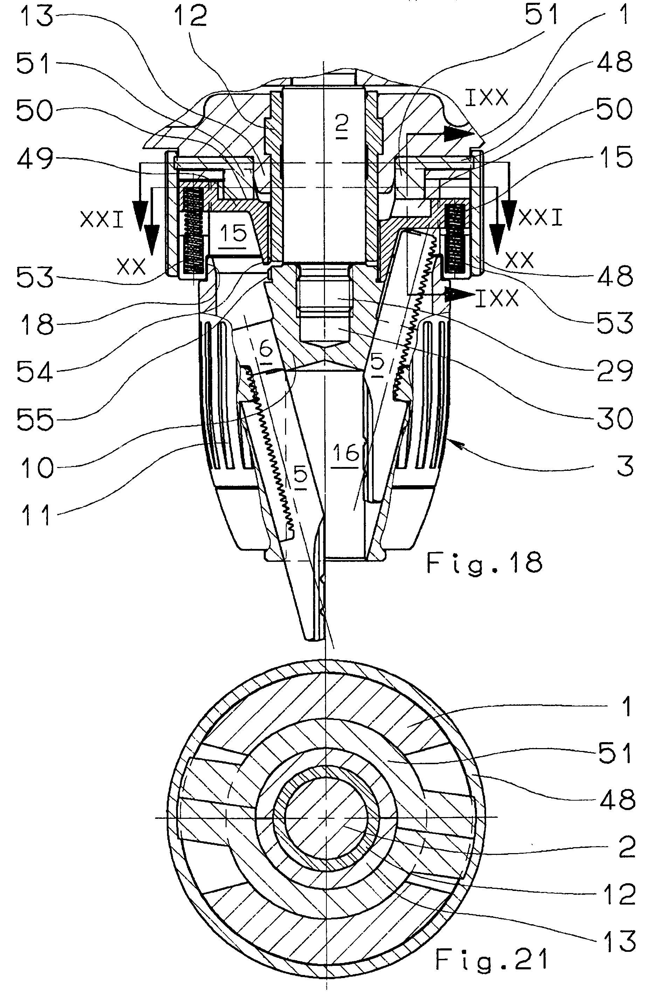

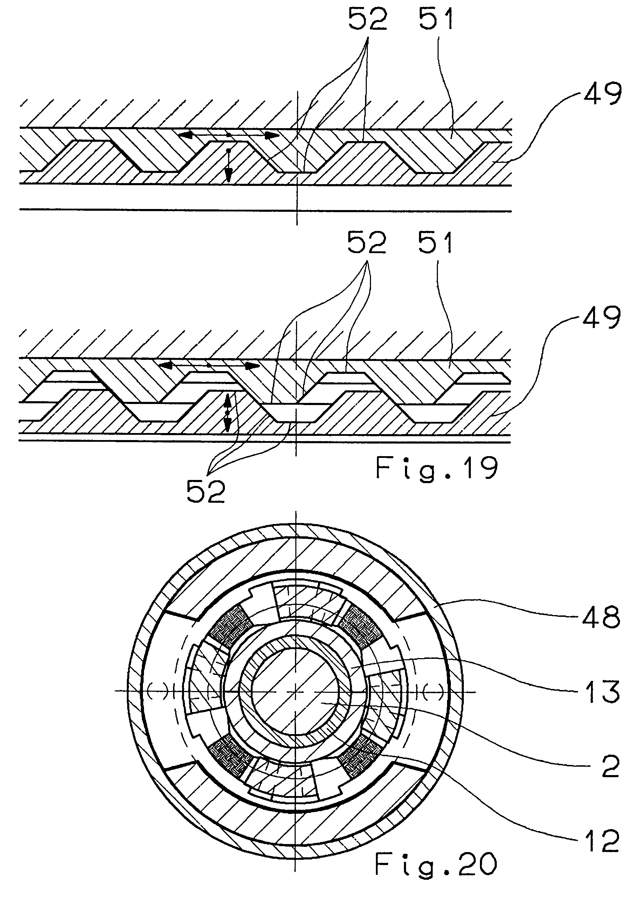

Die Fig. 18 bis 21 zeigen eine Ausführungsform, bei der der Ringraum 15 außen mit einer am Spindelgehäuse 1 drehbar geführten Betätigungshülse 48 abgeschlossen ist, die mit einem im Spindelgehäuse 1 axial verstellbaren, undrehbaren Sperring 49 gekuppelt ist, welcher in seiner gegen den Futterkörper 10 vorgeschobenen Sperrstellung, in Fig. 18 rechts dargestellt, am Futterkörper 10 zum Eingriff kommt und ihn gegen Verdrehen sperrt. Die Betätigungshülse 48 ist und axial unverschiebbar am Spindelgehäuse 1 geführt. Die Kupplung 50 zwischen der Betätigungshülse 48 und dem Sperring 49 erfolgt über eine aus Fig. 19 ersichtliche Steuerscheibe 51 mit einer Steuerkurve 52, in der der Sperring 49 unter der Kraft von Rückstellfedern 53 axial an der Steuerscheibe 51 anliegt. Die Fig. 19 zeigt die gegenseitige Stellung von Sperring 49 und Steuerscheibe 51 im Kupplungsbereich bei in der Sperrstellung stehendem Sperring in der unteren Figurenhälfte, in der oberen Figurenhälfte dagegen im entsperrten Zustand. Der Ringraum 15 ist im Sperring 49 ausgebildet, der am radial innen liegenden Rand des Ringraums 15 einen Zahnring 54 trägt, der an einem am Futterkörper 10 ausgebildeten, zugeordneten Zahnring 55 zum Sperreingriff kommt, wenn der Sperring 49 in die gegen das Bohrfutter 3 axial vorgestellte Sperrstellung verschoben ist.

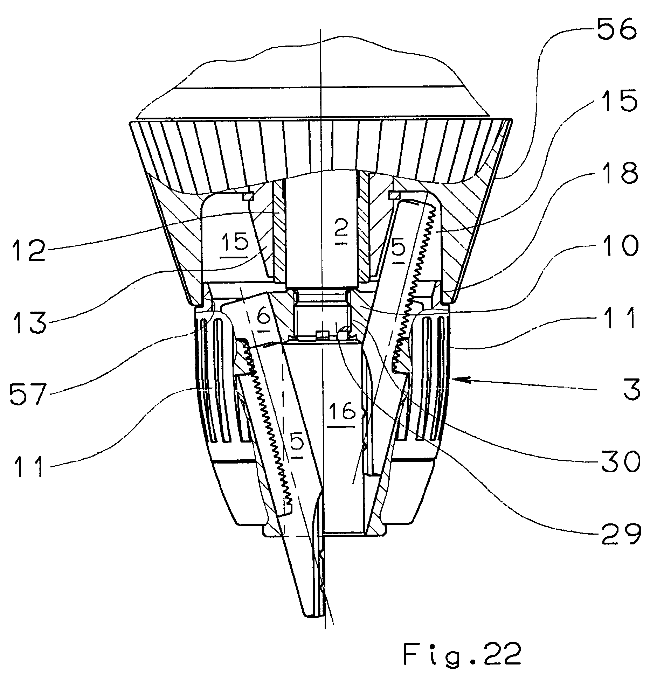

Die Fig. 22 schließlich zeigt ein Ausführungsbeispiel, bei dem im Spindelgehäuse 1 eine das Drehmoment der Bohrspindel begrenzende Drehmomentkupplung vorgesehen ist, die allerdings in der Figur der Einfachheit und besseren Übersicht wegen nicht dargestellt ist. Eine solche Drehmomentkupplung ist mittels eines außen am Spindelgehäuse 1 verdrehbar geführten Stellringes 56 bezüglich des maximal übertragbaren Drehmomentes einstellbar. Im Ausführungsbeispiel dient dieser Stellring 56 zugleich zum Abschließen des Ringraums 15 nach außen, wozu der Stellring 56 den Ringraum 15 vom Spindelgehäuse 1 aus bis zum Bohrfutter 3 axial übergreift und den Spannring 11 des Bohrfutters in einem Ringfalz 57 überlappt.

## Patentansprüche

1. Bohrvorrichtung, bestehend aus einem Bohrfutter (3) mit einem Futterkörper (10), mit zwischen sich ein Bohrwerkzeug aufnehmenden Spannbacken (4), die Backenschäfte (5) aufweisen, welche zur Anpassung der Spannbackenstellung an den Einspanndurchmesser des Bohrwerkzeugs und zum Spannen und Lösen des Bohrfutters in Führungsaufnahmen (6) des Bohrfutters (3) verstellbar sind, wobei die Enden der Backenschäfte (5) beim Verstellen der Spannbacken (4) zu größeren Einspanndurchmessern in ihrer Extrmposition rückwärts aus den Führungsaufnahmen (6) vorstehen, und mit einem mit dem Futterkörper (10) koaxialen und zum Verstellen der Spannbacken (4) relativ zum Futterkörper (10) verdrehbaren Spannring (11), sowie aus einer mit dem Futterkörper (10) koaxialen und drehschlüssig verbundenen Bohrspindel (2), die in einem Spindelgehäuse (1), insbesondere einer Handbohrmaschine, drehbar und antreibbar gelagert ist, dadurch gekennzeichnet, daß die Backenschäfte (5) beim Verstellen der Spannbacken (4) zu größeren Eispanndurchmessern rückwärts aus den Führungsaunahmen (6) austreten und daß das Bohrfutter (3) auf der Bohrspindel (2) axial so dicht am Spindelgehäuse (1) angeordnet ist, daß die austretenden Enden der Backenschäfte (5) in einem im Spindelgehäuse (1) koaxial mit der Bohrspindel (2) vorgesehenen axial zum Bohrfutter (3) hin offenen Ringraum (15) vorstehen, in dem die Backenschäfte (5) bei sich drehendem Bohrfutter (3) umlaufen.

2. Bohrvorrichtung nach Anspruch 1, wobei sich im Spindelgehäuse (1) ein Spindellager (12) befindet, das bohrfutterseitig am Austritt der Bohrspindel (2) aus dem Spindelgehäuse (1) angeordnet ist, dadurch gekennzeichnet, daß das Spindellager (12) vom Ringraum (15) umgeben ist und sich zwischen den rückwärts aus den Führungsaufnahmen (6) austretenden Enden der Backenschäfte (5) befindet.

3. Vorrichtung nach Anspruch 1 oder 2, dadurch gekennzeichnet, daß der Ringraum (15) zwischen dem Bohrfutter (3) und dem Spindelgehäuse (1) nach außen hin abgeschlossen ist.

4. Vorrichtung nach Anspruch 3, dadurch gekennzeichnet, daß das Spindelgehäuse (1) den Ringraum (15) an dessen von der Bohrspindel (2) aus gesehen auswärts liegenden Seite übergreift und mit einem im Querschnitt kreisförmigen Gehäuserand (17) bis an das Bohrfutter (3) vorsteht.

5. Vorrichtung nach Anspruch 4, dadurch gekennzeichnet, daß der Gehäuserand (17) des Spindelgehäuses (1) mit dem Bohrfutter (3) eine axiale Überlappung (18) bildet.

6. Vorrichtung nach Anspruch 5, dadurch gekennzeichnet, daß die Überlappung (18) zwischen dem Gehäuserand (17) und dem Spannring (11) des Bohrfutters (3) ausgebildet ist.

7. Vorrichtung nach Anspruch 5 oder 6, dadurch gekennzeichnet, daß der Futterkörper (10) axial in das Spindelgehäuse (1) vorsteht und im Spindelgehäuse (1) einen Zahnkranz (21) aufweist, der mit einem zum Bohrantrieb gehörenden Antriebszahnrad (20) im Eingriff steht.

8. Vorrichtung nach einem der Ansprüche 3 bis 7, dadurch gekennzeichnet, daß im Ringraum (15) ein im Spindelgehäuse (1) vorgesehener Druck- oder Saugluftkanal (23) mündet, der an ein Druck- oder Saugluftgebläse angeschlossen oder anschließbar ist.

9. Vorrichtung nach einem der Ansprüche 1 bis 8, dadurch gekennzeichnet, daß unmittelbar zwischen dem rückwärtigen Ende des Futterkörpers (10) einerseits und dem Spindellager (12) oder einem zwischen der Bohrspindel (2) und dem Ringraum (15) befindlichen Hals (13) des Spindelgehäuses (1) andererseits ein die Schlagfunktion auf das Bohrfutter (3) bei dessen Umlauf erzeugender Profilkranz (25) vorgesehen ist.

10. Vorrichtung nach einem der Ansprüche 1 bis 9, dadurch gekennzeichnet, daß die Bohrspindel (2) und der Futterkörper (10) einstückig miteinander ausgeführt sind.

11. Vorrichtung nach einem der Ansprüche 1 bis 9, dadurch gekennzeichnet, daß die Bohrspindel (2) stirnseitig einen axialen Verbindungszapfen (29) und der Futterkörper (10) eine Zapfenaufnahme (30) aufweist, in die der Verbindungszapfen (29) drehschlüssig eingreift.

12. Vorrichtung nach Anspruch 11, dadurch gekennzeichnet, daß der Verbindungszapfen (29) und die Zapfenaufnahme (30) einen unrunden, insbesondere mehrkantigen Querschnitt besitzen und durch eine in Umfangsrichtung verlaufende Nut- und Federverbindung axial aneinander gesichert sind.

13. Vorrichtung nach Anspruch 12, dadurch gekennzeichnet, daß anstelle der Nut- und Federverbindung der Verbindungszapfen (29) in einer Ringnut einen am Futterkörper (10) zum Anschlag kommenden Sicherungsring (33) trägt.

14. Vorrichtung nach Anspruch 12, dadurch gekennzeichnet, daß anstelle der Nut- und Federverbindung in der Wand der Zapfenaufnahme (30) eine Ringnut (31) ausgebildet ist, in die Werkstoff (32) aus dem Verbindungszapfen (29) durch Werkstoffverformung eingesickt ist.

15. Vorrichtung nach Anspruch 1, dadurch gekennzeichnet, daß der Verbindungszapfen (29) und die Zapfenaufnahme (30) durch eine axial verlaufende Nut-und Federverbindung (34) gegen Relativverdrehungen und mit einem am Futterkörper (10) zum Anschlag kommenden, in einer Ringnut des Verbindungszapfens (29) sitzenden Anschlagring (33) gegen axiale Relativverstellungen gesichert sind.

16. Vorrichtung nach Anspruch 11, dadurch gekennzeichnet, daß der Verbindungszapfen (29) und die Zapfenaufnahme (30) ineinander geschraubt sind und der Verbindungszapfen (29) mit stirnseitig offenen Radialoder Axialnuten (36) versehen ist, in die Werkstoff (37) aus der Wand der Zapfenaufnahme (30) durch Werkstoffvervormung eingesickt ist.

17. Vorrichtung nach einem der Ansprüche 11 bis 16, dadurch gekennzeichnet, daß der Verbindungszapfen (29) bis in eine im Futterkörper (10) für die Aufnahme des Werkzeugschaftes vorhandene Ausnehmung (16) vorsteht, in die die Spannbacken (4) hineinragen.

18. Vorrichtung nach Anspruch 17, dadurch gekennzeichnet, daß der Verbindungszapfen (29) axial begrenzt verschiebbar in der Zapfenaufnahme (30) gehalten ist.

19. Vorrichtung nach Anspruch 17, dadurch gekennzeichnet, daß der Verbindungszapfen (29) an seinem in die Ausnehmung (16) für den Werkzeugschaft vorstehenden Ende Einrichtungen (39) zur Führung und/oder Drehmitnahme des Werkzeugschaftendes aufweist.

20. Vorrichtung nach Anspruch 3, dadurch gekennzeichnet, daß das Spindelgehäuse (1) den Ringraum (15) außen mit einem Kragen (40) übergreift, an dem etwa radial nach innen gegen die Kraft einer Rückstellfeder (44, 47) verstellbare Sperrglieder (41) angeordnet sind, die im einwärts verstellten Zustand in am Futterkörper (10) vorgesehene Sperrausnehmungen (42) greifen und den Futterkörper (10) gegen Drehen sperren.

21. Vorrichtung nach Anspruch 20, dadurch gekennzeichnet, daß die Sperrausnehmungen (42) von den Zahnlücken eines am Futterkörper (10) ausgebildeten Zahnkranzes (43) gebildet sind.

22. Vorrichtung nach Anspruch 20, dadurch gekennzeichnet, daß die Sperrausnehmungen (42) von den die äußere Umfangsfläche des Futterkörpers (10) anschneidenden Führungsaufnahmen (6) für die Backenschäfte (5) gebildet sind.

23. Vorrichtung nach einem der Ansprüche 20 bis 22, dadurch gekennzeichnet, daß die Sperrglieder (41) von den Enden einer sich in Umfangsrichtung des Kragens (40) erstreckenden, zur Erzeugung der Rückstellkraft vorgespannten Blattfeder (44) gebildet sind und durch am Kragen (40) verstellbar geführte Betätigungsglieder (45) verstellbar sind.

24. Vorrichtung nach Anspruch 23, dadurch gekennzeichnet, daß die Betätigungsglieder (45) als die Federenden halternde, radial verstellbare Taster ausgebildet sind.

25. Vorrichtung nach Anspruch 23, dadurch gekennzeichnet, daß ein einziges Betätigungsglied (45) für alle Sperrglieder (41) vorgesehen und dieses als am Kragen (40) verstellbarer Betätigungsring ausgebildet ist, der mit Steuerkurven (46) für die ihn anliegenden Sperrglieder (41) versehen ist.

26. Vorrichtung nach Anspruch 25, dadurch gekennzeichnet, daß der Betätigungsring in Umfangsrichtung verdrehbar ist und die Steuerkurven (46) entsprechend in Umfangsrichtung verlaufen.

27. Vorrichtung nach Anspruch 25, dadurch gekennzeichnet, daß der Betätigungsring in Axialrichtung verschiebbar ist und die Steuerkurven (46) entsprechend in Axialrichtung verlaufen.

28. Vorrichtung nach Anspruch 3, dadurch gekennzeichnet, daß der Ringraum (15) außen mit einer am Spindelgehäuse (1) verstellbar geführten Betätigungshülse (48) abgeschlossen ist, die mit einem im Spindelgehäuse (1) axial verstellbaren, undrehbaren Sperring (49) gekuppelt ist, der in einer gegen den Futterkörper (10) vorgeschobenen Sperrstellung am Futterkörper zum Eingriff kommt und ihn gegen Verdrehen sperrt.

29. Vorrichtung nach Anspruch 28, dadurch gekennzeichnet, daß die Betätigungshülse (48) verdrehbar und axial unverschiebbar am Spindelgehäuse (1) geführt und die Kupplung (50) mit dem Sperring (49) als Steuerkurve (52) ausgebildet ist, in der der Sperring (49) unter der Kraft mindestens einer Rückstellfeder (53) axial an der Betätigungshülse (48) anliegt.

30. Vorrichtung nach Anspruch 28 oder 29, dadurch gekennzeichnet, daß der Ringraum (15) in dem Sperring (49) ausgebildet ist, der am radial innen liegenden Rand des Ringraums (15) einen Zahnring (54) zum Sperreingriff an einem am Futterkörper (10) zugeordneten Zahnring (55) aufweist.

31. Vorrichtung nach Anspruch 3, dadurch gekennzeichnet, daß bei einem Spindelgehäuse (1) mit einer das Drehmoment der Bohrspindel (2) begrenzenden Drehmomentkupplung, die mittels eines außen am Spindelgehäuse (1) verdrehbar geführten Stellrings (56) bezüglich des maximal übertragbaren Drehmoments einstellbar ist, der Stellring (56) den Ringraum (15) vom Spindelgehäuse (1) bis zum Bohrfutter (3) axial übergreift und nach außen abschließt.

## Claims

1. A drilling apparatus comprising a drilling chuck (3) having a chuck body (10), chucking jaws (4) which accommodate a drilling tool between them and which have jaw shanks (5) which are displaceable in guide receiving means (6) of the drilling chuck (3) for adaptation of the chucking jaw position to the drilling tool clamping diameter and for tightening and loosening the drilling chuck, wherein upon displacement of the chucking jaws (4) to larger clamping diameters in their extreme position the ends of the jaw shanks (5) project rearwardly out of the guide receiving means (6), and having a clamping ring (11) which is coaxial with the chuck body (10) and which is rotatable for displacement of the chucking jaws (4) relative to the chuck body (10), and further comprising a drilling spindle (2) which is non-rotatably connected to and coaxial with the chuck body (10) and which is drivably and rotatably mounted in a spindle housing (1), in particular of a hand drilling machine, characterised in that upon displacement of the chucking jaws (4) to larger clamping diameters the jaw shanks (5) issue rearwardly from the guide receiving means (6) and that the drilling chuck (3) is arranged on the drilling spindle (2) axially so close to the spindle housing (1) that the issuing ends of the jaw shanks (5) project in an annular space (15) which is provided in the spindle housing (1) in coaxial relationship with the drilling spindle (2) and which is axially open towards the drilling chuck (3) and in which the jaw shanks (5) rotate when the drilling chuck (3) is rotating.

2. A drilling apparatus according to claim 1 wherein disposed in the spindle housing (1) is a spindle bearing (12) which is arranged at the drilling chuck side at the issue of the drilling spindle (2) from the spindle housing (1), characterised in that the spindle bearing (12) is surrounded by the annular space (15) and is disposed between the ends of the jaw shanks (5) which issue rearwardly from the guide receiving means (6).

3. Apparatus according to claim 1 or claim 2 characterised in that the annular space (15) between the drilling chuck (3) and the spindle housing (1) is closed off outwardly.

4. Apparatus according to claim 3 characterised in that the spindle housing (1) engages over the annular space (15) at its side which is disposed outwardly as viewed from the drilling spindle (2) and it projects to the drilling chuck (3) with a housing edge portion (17) which is of circular cross-section.

5. Apparatus according to claim 4 characterised in that the housing edge portion (17) of the spindle housing (1) forms an axial overlap (18) with the drilling chuck (3).

6. Apparatus according to claim 5 characterised in that the overlap (18) is formed between the housing edge portion (17) and the clamping ring (11) of the drilling chuck (3).

7. Apparatus according to claim 5 or claim 6 characterised in that the chuck body (10) projects axially into the spindle housing (1) and in the spindle housing (1) has a toothed ring (21) which is in engagement with a drive gear (20) belonging to the drilling drive.

8. Apparatus according to one of claims 3 to 7 characterised in that a pressure or suction air passage (23) which is provided in the spindle housing (1) opens in the annular space (15) and is connected or connectable to a pressure or suction air fan.

9. Apparatus according to one of claims 1 to 8 characterised in that provided directly between the rearward end of the chuck body (10) on the one hand and the spindle bearing (12) or a neck (13) of the spindle housing (1), which is between the drilling spindle (2) and the annular space (15), on the other hand, is a profile ring (25) which produces the hammer function on the drilling chuck (3) upon rotational movement thereof.

10. Apparatus according to one of claims 1 to 9 characterised in that the drilling spindle (2) and the chuck body (10) are formed in one piece with each other.

11. Apparatus according to one of claims 1 to 9 characterised in that at the end the drilling spindle (2) has an axial connecting trunnion (29) and the chuck body (10) has a trunnion receiving means (30) into which the connecting trunnion (29) non-rotatably engages.

12. Apparatus according to claim 11 characterised in that the connecting trunnion (29) and the trunnion receiving means (30) are of a non-round and in particular polygonal cross-section and are axially secured to each other by a groove-and-key connection which extends in the peripheral direction.

13. Apparatus according to claim 12 characterised in that instead of the groove-and-key connection the connecting trunnion (29) carries in an annular groove a securing ring (33) which comes to bear against the chuck body (10).

14. Apparatus according to claim 12 characterised in that instead of the groove-and-key connection formed in the wall of the trunnion receiving means (30) is an annular groove (31) into which material (32) from the connecting trunnion (29) is crimped by deformation of the material.

15. Apparatus according to claim 1 characterised in that the connecting trunnion (29) and the trunnion receiving means (30) are secured to prevent relative rotational movements by an axially extending groove-and-key connection (34) and are secured to prevent axial relative displacements by an abutment ring (33) which comes to bear against the chuck body (10) and which is carried in an annular groove in the connecting trunnion (29).

16. Apparatus according to claim 11 characterised in that the connecting trunnion (29) and the trunnion receiving means (30) are screwed into each other and the connecting trunnion (29) is provided with radial or axial grooves (39) which are open at the end and into which material (37) from the wall of the trunnion receiving means (30) is crimped by deformation of the material.

17. Apparatus according to one of claims 11 to 16 characterised in that the connecting trunnion (29) projects into an opening (16) which is provided in the chuck body (10) for receiving the tool shank and into which the chucking jaws (4) extend.

18. Apparatus according to claim 17 characterised in that the connecting trunnion (29) is axially limitedly displaceably held in the trunnion receiving means (30).

19. Apparatus according to claim 17 characterised in that at its end projecting into the opening (16) for the tool shank the connecting trunnion (29) has means (39) for guiding and/or rotationally entraining the tool shank end.

20. Apparatus according to claim 3 characterised in that the spindle housing (1) externally engages over the annular space (IS) with a collar (40) on which are arranged locking members (41) which are displaceable substantially radially inwardly against the force of a return spring (44, 47) and which in the inwardly displaced condition engage into locking openings (42) provided on the chuck body (10) and lock the chuck body (10) to prevent rotary movement thereof.

21. Apparatus according to claim 20 characterised in that the locking openings (42) are formed by the tooth gaps of a toothed ring (43) formed on the chuck body (10).

22. Apparatus according to claim 20 characterised in that the locking openings (42) are formed by the guide receiving means (6) for the jaw shanks (5), which guide receiving means cut into the outer peripheral surface of the chuck body (10).

23. Apparatus according to one of claims 20 to 22 characterised in that the locking members (41) are formed by the ends of a leaf spring (44) which extends in the peripheral direction of the collar (40) and which is biased to produce the return force, and they are displaceable by actuating members (45) guided displaceably on the collar (40).

24. Apparatus according to claim 23 characterised in that the actuating members are in the form of radially displaceable pushbuttons which hold the spring ends.

25. Apparatus according to claim 23 characterised in that a single actuating member (45) is provided for all locking members (41) and it is in the form of an actuating ring which is displaceable on the collar (40) and which is provided with control cams (46) for the locking members (41) which bear against it.

26. Apparatus according to claim 25 characterised in that the actuating ring is rotatable in the peripheral direction and the control cams (46) correspondingly extend in the peripheral direction.

27. Apparatus according to claim 25 characterised in that the actuating ring is displaceable in the axial direction and the control cams (46) correspondingly extend in the axial direction.

28. Apparatus according to claim 3 characterised in that the annular space (15) is externally closed off by an actuating sleeve (48) which is guided displaceably on the spindle housing (1) and which is coupled to a non-rotatable locking ring (49) which is axially displaceable in the spindle housing (1) and which in a locking position of being advanced towards the chuck body (10) comes into engagement on the chuck body and locks it to prevent rotational movement.

29. Apparatus according to claim 28 characterised in that the actuating sleeve (48) is guided rotatably and axially immovably on the spindle housing (1) and the coupling (50) to the locking ring (49) is in the form of a control cam (52) in which the locking ring (49) bears axially against the actuating sleeve (48) under the force of at least one return spring (53).

30. Apparatus according to claim 28 or claim 29 characterised in that the annular space (15) is provided in the locking ring (49) which at the radially inwardly disposed edge of the annular space (15) has a toothed ring (54) for locking engagement on a toothed ring (55) associated on the chuck body (10).

31. Apparatus according to claim 3 characterised in that, with a spindle housing (1) having a torque coupling which limits the torque of the drilling spindle (2) and which can be set in respect of the maximum transmissible torque by means of a setting ring (56) guided rotatably on the spindle housing (1) on the exterior thereof, the setting ring (56) engages axially over the annular space (15) from the spindle housing (1) to the drilling chuck (3) and closes it off outwardly.

## Revendications

1. Dispositif de perçage constitué par un mandrin de perçage (3) comprenant un corps de mandrin (10), des mors de serrage (4) recevant entre eux un outil de perçage et présentant des tiges de mors (5) qui sont déplaçables dans des logements de guidage (6) du mandrin de serrage (3) en vue de l'adaptation de la position des mors au diamètre de serrage de l'outil de perçage et en vue du serrage et du desserrage du mandrin, les tiges de mors (5), lors du réglage des mors (4) sur des diamètres de serrage plus importants, dépassant dans leur position extrême vers l'arrière des logements de guidage (6), et une bague de serrage (11) coaxiale au corps de mandrin (10) et mobile angulairement par rapport au corps de mandrin (10) en vue du réglage des mors (4), ainsi que par une broche de perçage (2) coaxiale au corps de mandrin (10) et solidaire en rotation de ce dernier, cette broche étant montée mobile en rotation et entrainée dans un nez porte-broche (1), en particulier d'une perceuse à main, **caractérisé** par le fait que les tiges de mors (5), lors du réglage des mors (4) sur des diamètres de serrage plus importants, sortent vers l'arrière des logements de guidage (6) et que le mandrin de perçage (3) est disposé sur la broche de perçage (2) axialement si près du nez porte-broche (1) que les extrémités sortantes des tiges de mors (5) dépassent dans un espace annulaire (15) qui est prévu dans le nez porte-broche (1) coaxialement à la broche de perçage (2), qui est ouvert axialement vers le mandrin de perçage (3) et dans lequel les tiges de mors (5) tournent lors de la rotation du mandrin de perçage (3).

2. Dispositif de perçage suivant la revendication 1, le nez porte-broche (1) renfermant un palier de broche (12) disposé côté mandrin de perçage à la sortie de la broche de perçage (2) du nez porte-broche (1), **caractérisé** par le fait que le palier de broche (12) est entouré par l'espace annulaire (15) et se trouve entre les extrémités des tiges de mors (5), sortant vers l'arrière des logements de guidage (6).

3. Dispositif de perçage suivant la revendication 1 ou 2, **caractérisé** par le fait que l'espace annulaire (15) est fermé vers l'extérieur entre le mandrin de perçage (3) et le nez porte-broche (1).

4. Dispositif de perçage suivant la revendication 3, **caractérisé** par le fait que le nez porte-broche (1) entoure l'espace annulaire (15) sur le côté de ce dernier qui, vu depuis la broche de perçage (2), est situé à l'extérieur et comprend un rebord (17) de section circulaire dépassant jusqu'au mandrin de serrage (3).

5. Dispositif de perçage suivant la revendication 4, **caractérisé** par le fait que le rebord (17) du nez porte-broche (1) établit un chevauchement axial (18) avec le mandrin de perçage (3).

6. Dispositif de perçage suivant la revendication 5, **caractérisé** par le fait que le chevauchement (18) est établi entre le rebord (17) du nez porte-broche et la bague de serrage (11) du mandrin de perçage (3).

7. Dispositif de perçage suivant la revendication 5 ou 6, **caractérisé** par le fait que le corps de mandrin (10) dépasse axialement dans le nez porte-broche (1) et présente, dans le nez porte-broche (1), une couronne dentée (21) en prise avec un pignon d'entraînement (20) faisant partie du système d'entraînement de perçage.

8. Dispositif de perçage suivant l'une des revendications 3 à 7, **caractérisé** par le fait qu'un canal de refoulement ou d'aspiration d'air (23) qui est prévu dans le nez porte-broche (1) et qui est ou peut être raccordé à une soufflante de refoulement d'air ou d'aspiration d'air débouche dans l'espace annulaire (15).

9. Dispositif de perçage suivant l'une des revendications 1 à 8, **caractérisé** par le fait qu'il comprend, directement entre l'extrémité arrière du corps de mandrin (10), d'une part, et le palier de broche (12) ou un col (13) du nez porte-broche (1), situé entre la broche de perçage (2) et l'espace annulaire (15), d'autre part, une couronne profilée (25) exerçant la fonction de percussion sur le mandrin de perçage (3), lors de la rotation de ce dernier.

10. Dispositif de perçage suivant l'une des revendications 1 à 9, **caractérisé** par le fait que la broche de perçage (2) et le corps de mandrin (10) sont constitués d'une seule pièce.

11. Dispositif suivant l'une des revendications 1 à 9, **caractérisé** par le fait que la broche de perçage (2) présente côté frontal un embout de liaison (25) axial et que le corps de mandrin (10) présente un logement d'embout (30) dans lequel l'embout de liaison (23) s'engage avec liaison d'entraînement.

12. Dispositif suivant la revendication 11, **caractérisé** par le fait que l'embout de liaison (29) et le logement d'embout (30) présentent une section non-circulaire, en particulier polygonale, et sont immobilisés axialement l'un par rapport à l'autre par une liaison par rainure et languette circonférentielle.

13. Dispositif suivant la revendication 12, **caractérisé** par le fait qu'au lieu de la liaison par rainure et languette, l'embout de liaison (29) comporte, dans une gorge annulaire, un circlip (33) venant en butée contre le corps de mandrin (10).

14. Dispositif suivant la revendication 12, **caractérisé** par le fait qu'au lieu de la liaison par rainure et languette, la paroi du logement d'embout (30) comporte une gorge annulaire (31) dans laquelle du matériau (32) de l'embout de liaison (29) est serti par déformation.

15. Dispositif suivant la revendication 1, **caractérisé** par le fait que l'embout de liaison (29) et le logement d'embout (30) sont rendus solidaires l'un par rapport à l'autre angulairement par une liaison par rainure et languette (34) s'étendant axialement, et axialement par un anneau de butée (33) qui est engagé dans une gorge annulaire de l'embout de liaison (29) et qui vient buter contre le corps de mandrin (10).

16. Dispositif suivant la revendication 11, **caractérisé** par le fait que l'embout de liaison (29) et le logement d'embout (30) sont vissés l'un dans l'autre et que l'embout de liaison (29) est muni de rainures radiales ou axiales (39) ouvertes frontalement dans lesquelles du matériau (37) de la paroi du logement d'embout (30) est serti par déformation.

17. Dispositif suivant l'une des revendications 11 à 16, **caractérisé** par le fait que l'embout de liaison (29) dépasse jusque dans un évidement (16) qui est prévu dans le corps de mandrin (10) pour recevoir la tige de l'outil et dans lequel font saillie les mors de serrage (4).

18. Dispositif suivant la revendication 17, **caractérisé** par le fait que l'embout de liaison (29) est maintenu avec mobilité axiale limitée dans le logement d'embout (30).

19. Dispositif suivant la revendication 17, **caractérisé** par le fait que l'embout de liaison (29) présente, à son extrémité dépassant dans l'évidement (16) pour la tige de l'outil, des dispositifs (29) pour le guidage ou l'entraînement en rotation de l'extrémité de la tige d'outil.

20. Dispositif suivant la revendication 3, **caractérisé** par le fait que le nez porte-broche (1) entoure l'espace annulaire (15) extérieurement à l'aide d'un col (40) sur lequel sont disposés des organes de blocage (41) déplaçables à peu près radialement vers l'intérieur à l'encontre de la force d'un ressort de rappel (44, 47), ces organes pénétrant, lorsqu'ils sont déplacés vers l'intérieur, dans des évidements de blocage (42) prévus sur le corps de mandrin (10) et bloquant alors le corps de mandrin (10) pour l'empêcher de tourner.

21. Dispositif suivant la revendication 20, **caractérisé** par le fait que les évidements de blocage (42) sont constitués par les intervalles entre les dents d'une couronne dentée (43) formée sur le corps de mandrin (10).

22. Dispositif suivant la revendication 20, **caractérisé** par le fait que les évidements de blocage (42) sont constitués par les logements de guidage (6) pour les tiges de mors (5), coupant la surface périphérique extérieure du corps de mandrin (10).

23. Dispositif suivant l'une des revendications 20 à 22, **caractérisé** par le fait que les organes de blocage (42) sont constitués par les extrémités d'une lame de ressort (44) s'étendant dans la direction circonférentielle du col (40) et précontrainte pour produire la force de rappel, et sont déplaçables par des organes d'actionnement (45) guidés de façon déplaçable sur le col (40).

24. Dispositif suivant la revendication 23, **caractérisé** par le fait que les organes d'actionnement (45) sont constitués par des touches déplaçables radialement, maintenant les extrémités du ressort.

25. Dispositif suivant la revendication 23, **caractérisé** par le fait qu'un organe d'actionnement unique (45) est prévu pour tous les organes de blocage (42) et est réalisé sous la forme d'une bague d'actionnement déplaçable sur le col (40) et munie de cames (46) pour les organes de blocage (41) qui y sont appliqués.

26. Dispositif suivant la revendication 25, **caractérisé** par le fait que la bague d'actionnement est mobile angulairement dans la direction circonférentielle et que les cames de commande (46) s'étendent de façon correspondante dans la direction circonférentielle.

27. Dispositif suivant la revendication 25, **caractérisé** par le fait que la bague d'actionnement est déplaçable en direction axiale et que les cames de commande (46) s'étendent de façon correspondante en direction axiale.

28. Dispositif suivant la revendication 3, **caractérisé** par le fait que l'espace annulaire (15) est fermé extérieurement par une douille d'actionnement (48) guidée de façon déplaçable sur le nez porte-broche (1) et couplée avec une bague de blocage (49) immobilisée angulairement, déplaçable axialement dans le nez porte-broche (1), laquelle bague, lorsqu'elle se trouve en position de blocage avancée contre le corps de mandrin (10), vient en prise avec ce dernier et l'empêche de tourner.

29. Dispositif suivant la revendication 28, **caractérisé** par le fait que la douille d'actionnement (48) est déplaçable angulairement et immobilisée axialement sur le nez porte-broche (1) et le couplage (50) avec la bague de blocage (49) est réalisé sous la forme d'une came de commande (52) dans laquelle la bague de blocage (49) est appliquée axialement contre la douille d'actionnement (48) sous la force d'au moins un ressort de rappel (53).

30. Dispositif suivant la revendication 28 ou 29, **caractérisé** par le fait que l'espace annulaire (15) est formé dans la bague de blocage (49) qui présente, au bord radialement intérieur de l'espace annulaire (15), une bague dentée (54) pour l'engagement avec blocage avec une bague dentée (55) disposée sur le corps de mandrin (10).

31. Dispositif suivant la revendication 3, **caractérisé** par le fait que, dans le cas d'un nez porte-broche (1) comportant un limiteur de couple qui limite le couple de la broche de perçage (2) et qui est réglable en ce qui concerne le couple maximal transmissible au moyen d'une bague de réglage (56) montée mobile en rotation extérieurement sur le nez porte-broche (1), la bague de réglage (56) dépasse axialement et entoure extérieurement l'espace annulaire (15) depuis le nez porte-broche (1) Jusqu'au mandrin de perçage (3).
